# DEMANDE DE BREVET EUROPEEN

(11) **EP 1 676 501 A2**
(43) Date de publication de la demande: **05.07.2006**
(21) Numéro de dépôt: 05292819.9
(22) Date de dépôt: 29.12.2005
(51) Int. Cl.: A47B 91/02

(54) **Accroissement de l'amplitude et de la stabilité en extension d'un dispositif télescopique de support extensible, ainsi que maximisation du nombre de paliers**

(30) Priorité: 04.01.2005 FR 0500058
(71) Demandeur: Rothschild, Philippe, 92140 Clamart (FR)
(72) Inventeur: Rothschild, Philippe, 92140 Clamart (FR)

(57) **Abrégé**

L'invention porte sur l'aménagement d'un dispositif de support extensible comportant une ou des butée(s) (3) d'une longueur (h₇), supérieure à la distance (h₄) séparant le haut du profil de came (A) du plan horizontal (4) de la partie mâle (1) à l'opposé des bases d'appui ou des marches (8ₐ, 8_{b},) et un ou des décrochement(s) (17) comportant, du côté de la base de prise d'appui la plus basse, une extension (18) s'étendant latéralement, définie selon un arc (d₂) au moins égal à l'arc (d₁), défini entre le bord du profil de came (A) situé du côté latéral opposé au profil (B) et le bord le plus éloigné du profil de came (D), dans cette même direction opposée au profil (B), et s'étendant vers le bas, depuis le sommet de la partie supérieure de la partie mâle (1), jusqu'à la base (10) de ladite extension (18), sur une distance (h₃) supérieure à la distance (h4) séparant le haut de l'extrémité supérieure du profil vertical de came (A) de cette même partie supérieure (4) de la partie mâle (1), de sorte à éviter que, lorsque le dispositif télescopique est en phase de compression, le plan inférieur de l'extrémité (3') de la ou des butée(s) (3) ne vienne en appui sur le plan supérieur (4) de la partie mâle (1) ou sur la paroi inférieure (10) de l'extension (18), s'étendant latéralement, du décrochement (17).

## Description

La présente invention a pour objet le perfectionnement d'un support télescopique à un ou plusieurs paliers, dont l'élément mâle comporte une surface cylindrique extérieure et l'élément femelle une surface cylindrique intérieure, un des éléments comportant en sa périphérie, au moins un décrochement d'une butée, solidaire de l'autre élément, ces deux surfaces coopérant, la position relative de ces deux éléments étant commandée par un système de guidage à base de profils successifs de cames, solidaire de l'un des éléments, en rotation relative par rapport à un doigt-guide solidaire de l'autre élément, le système de guidage à base de profils successifs de cames définissant des paliers d'appui à des niveaux différents, décalés latéralement, ce dispositif perfectionné étant doté d'une plus grande amplitude, d'une plus grande stabilité en extension et étant pourvu d'un nombre plus important de positions de prise d'appui en extension.

On connaît déjà des supports destinés à permettre la proclive et la déclive, voire la surélévation temporaire d'un plan de couchage.

On connaît en particulier un support télescopique qui repose sur l'utilisation d'un système de guidage à base de profils successifs de cames en rotation solidaire de l'un des éléments, avec doigt-guide solidaire de l'autre élément, la came constituant un circuit fermé et définissant des paliers d'appui à un niveau bas et un ou plusieurs niveaux hauts, caractérisé par la présence de moyens de maintien au niveau d'au moins un palier haut défini par le système came-doigt, constitués d'au moins un décrochement à la périphérie haute de la partie mâle, coopérant avec au moins une butée en saillie sur la partie femelle objet des brevets (EP-01655190, FR - 90 4645 et FR 90 14573).

L'amplitude maximale d'un tel support télescopique est déterminée en particulier par la longueur maximale d'au moins une butée solidaire de l'un des éléments télescopiques, cette longueur maximale étant elle-même fonction de la distance séparant le haut du profil vertical parcouru par le doigt-guide, sur l'autre élément du dispositif télescopique, au début et à la fin du cycle d'extension / compression, du plan horizontal supérieur de cet autre élément, la butée ne pouvant pénétrer dans le décrochement coopérant de ce même élément, en fin de cycle, qu'au moment où le doigt-guide rejoint à nouveau ce profil vertical et est aligné sur la génératrice de cet élément qui traverse ce même profil en son milieu.

Ce support de l'art antérieur limite donc, pour un diamètre et une hauteur de pied donnée, le nombre et l'amplitude des paliers hauts pouvant être aménagés.

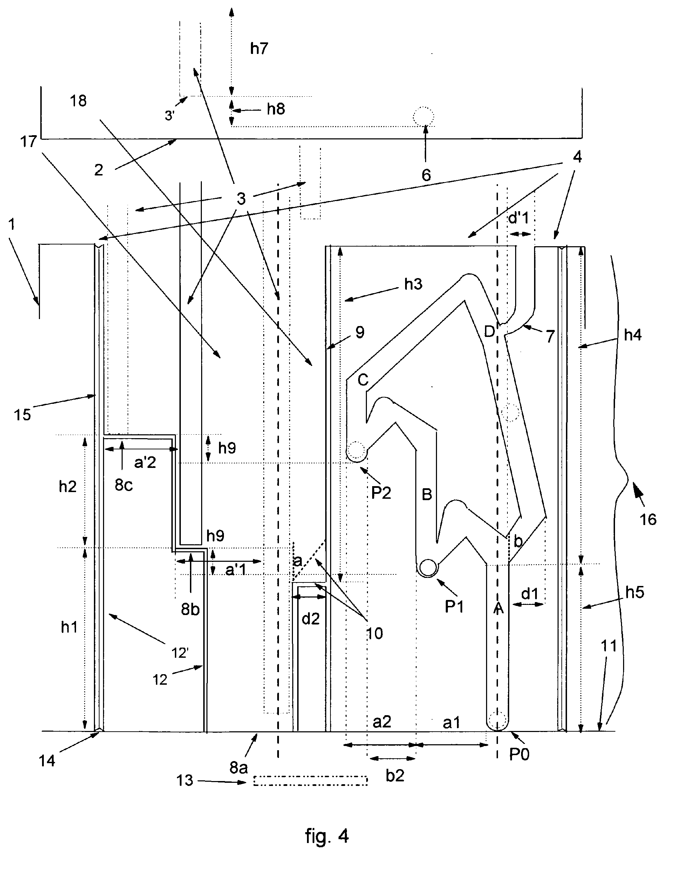

Ce support de l'art antérieur prévoit également « un deuxième tronçon » « incliné » « prolongeant le premier tronçon vers le haut », qui s'élève, selon la fig. 4a du brevet EP-01655190, au fur et à mesure qu'il s'éloigne du premier tronçon.

Dans la mesure où cette orientation du deuxième tronçon du système de guidage à base de profils successifs de cames est l'un des facteurs de détermination de la hauteur du profil vertical parcouru par le doigt-guide au début et à la fin du cycle d'extension / compression, elle restreint inutilement les possibilités d'aménager les positions relatives, d'une part du décrochement, d'autre part du système de came à la surface de l'un des éléments et donc aussi l'amplitude maximale et le nombre de paliers du support télescopique pouvant être envisagés pour un support télescopique d'une hauteur initiale et d'un diamètre donné.

Le support, selon l'art antérieur, prévoit aussi, que dans le cadre d'une réalisation en matière plastique, le relâchement des cotes de fabrication, rendu nécessaire par le risque d'ovalisation dû à l'inégale répartition des masses à la périphérie de la partie mâle, pourra être compensé par le recours à des surépaisseurs orientées selon sa génératrice et disposées transversalement sous forme d'un anneau, au niveau correspondant, en position d'extension, aux points de contacts latéraux de la base de la partie femelle avec la partie mâle.

On connaît également un support extensible à un ou plusieurs paliers hauts, dont l'extension résulte de l'engagement d'une butée de longueur fixe disposée verticalement en périphérie de l'un des éléments, intérieurement pour l'élément femelle ou extérieurement pour l'élément mâle, dans au moins un logement coopérant de l'autre élément télescopique, la prise d'appui d'au moins une butée s'effectuant sur le fonds d'au moins un logement coopérant ou sur la partie horizontale supérieure de l'élément mâle objet du brevet (FR 92 14230).

Ce support télescopique selon l'art antérieur, qui prévoit le choix entre au moins deux niveaux de paliers hauts par le biais d'un prépositionnement des éléments télescopiques l'un par rapport à l'autre, comporte sur l'un des éléments télescopiques, pour chaque niveau de palier prévu, un décrochement de profondeur équivalente, les décrochements étant obligatoirement disjoints et leur nombre total se trouvant ainsi limité en raison de la surface accrue occupée de ce fait sur le cylindre décrit par la partie intérieure de cet élément télescopique.

La production d'un tel support télescopique impose par ailleurs, soit le recours à des moyens de production coûteux, bille ou poudre aimantée introduite manuellement, pour obtenir le maintien solidaire des deux éléments télescopiques avant et après leur emboîtement, soit de recourir au blocage en force par resserrement de l'extrémité du décrochement recevant la butée, lequel risque d'être soit inopérant ou excessif en fonction des déformations subies par la matière synthétique à la sortie du moule d'injection.

En cas de déboîtement non souhaité, la réinsertion de la ou des butée(s) dans le(s) décrochement(s) correspondant à l'extension recherchée du support ne peut s'opérer par le simple abaissement de l'élément télescopique femelle par rapport à l'élément télescopique mâle et impose donc une manipulation du support par l'utilisateur.

On connaît également un support extensible à un ou plusieurs paliers hauts, dont l'extension résulte de l'engagement latéral de butées ainsi que d'un blocage en position par un dispositif à crans (FR 9305938).

La résistance de cet ensemble est fonction de la résistance à la poussée verticale de chacune des butées disposées en saillie des deux éléments télescopiques et en particulier de celles disposées dans la partie inférieure de l'élément télescopique femelle.

L'ajustement en hauteur du dispositif implique d'autre part le desserrement des deux éléments télescopiques l'un par rapport à l'autre, puis l'identification des butées de guidage et de prise d'appui correspondant à la nouvelle extension recherchée, puis l'introduction des butées coopérantes et enfin le serrage en position. Le déroulement facile de ces manipulations implique en particulier que le desserrage puis le serrage des agrafes élastiques puisse être obtenu sans difficulté pendant toute la durée de vie du dispositif.

Le support télescopique extensible selon la présente invention évite ces inconvénients en accentuant la souplesse d'utilisation du support autoréglable objet des brevets EP - 0165190, FR 90 04645 et FR 90 14573, en en accroissant l'amplitude maximum, la stabilité en extension et le nombre de paliers pour une même dimension de pied.

Selon une première caractéristique du dispositif télescopique de support extensible auto-réglable perfectionné, le/les décrochement(s) coopérant avec au moins une butée comporte(nt) une extension s'étendant latéralement, aménagée sur le côté opposé aux bases de prise d'appui formant paliers aménagées dans le bas du/des décrochement(s), de sorte que la base de cette extension, soit forme, sur partie ou sur la totalité de sa hauteur, un angle α formé avec la génératrice de la partie mâle, supérieur ou égal à l'angle β formé, avec cette même génératrice, par l'arête inférieure du tronçon du profil de came qui permet au doigt-guide de rejoindre le haut du profil de came parcouru par le doigt-guide au début et en fin du cycle d'extension/compression, soit est horizontale, sa paroi verticale étant alors déportée, dans un sens opposé à celui du déplacement de la butée dans son décrochement coopérant au moment de l'extension du dispositif, d'un arc égal ou supérieur à celui correspondant au parcours du doigt-guide le faisant transiter dans le système de guidage à base de profils successifs de cames ou dans le profil de jonction aménagés au-delà de la génératrice de la partie mâle passant par le centre du profil de came parcouru par le doigt-guide en début et en fin du cycle d'extension/compression du dispositif télescopique, de manière à ce que, quelle que soit sa longueur, le libre mouvement de la butée en périphérie de la partie mâle, ne soit pas entravé au moment où le doigt-guide transite par cette zone du système de guidage ou dans ce profil de jonction.

Selon une autre caractéristique d'un support télescopique de support extensible autoréglable perfectionné, la seule contrainte à satisfaire au moment de déterminer la longueur de la butée sur la partie femelle et de faire en sorte que cette longueur soit telle que la distance séparant son extrémité inférieure de la ligne tangentielle au bord inférieur du doigt-guide solidaire de la partie femelle soit légèrement inférieure à celle séparant, sur la partie mâle, l'un quelconque des niveaux des bases de prise d'appui successives, des lignes tangentielles au bas des logements de positionnement du doigt-guide correspondant, aménagés sur le système de guidage à base de profils.

Selon une autre caractéristique d'un support télescopique de support extensible auto-réglable perfectionné, le profil de came en zigzag, parcouru par le doigt après le déboîtement initial de la butée ou des butées, est descendant au fur et à mesure qu'il s'écarte du profil de came vertical parcouru par le doigt―guide en début et en fin du cycle d'extension / compression, permettant ainsi d'une part d'accroître les pentes des profils de came et facilitant ainsi le coulissement du doigt-guide à l'intérieur desdits profils et d'autre part, l'encastrement, tout au moins partiel, du profil de cames qui amène le doigt-guide à son apogée dans le système de guidage et de l'extension du décrochement de butée, s'étendant latéralement, en exploitant l'espace vacant entre la nervure extérieure dudit profil de came et le plan horizontal de la partie mâle à l'opposé des bases d'appui ou des marches.

Selon une autre caractéristique d'un support télescopique ainsi aménagé, pour limiter la surface totale occupée latéralement à la surface de sa partie mâle par l'ensemble constitué d'un système de guidage à base de profils successifs de cames et d'un/de décrochement(s), et donc pour pouvoir ainsi accentuer leur degré d'encastrement et, en conséquence, pour pouvoir maximiser le nombre de positions d'extensions du dispositif, les nervures qui se font face, respectivement sur l'extension du décrochement s'étendant latéralement et sur le profil du système de cames qui amène le doigt-guide à son apogée, peuvent être fusionnées sur partie de leur longueur.

Selon une autre caractéristique d'un support télescopique de support extensible auto-réglable perfectionné, réalisé en matière synthétique, le recours sur une partie mâle de type creuse, d'épaisseur constante, à des nervures délimitant les décrochements jointifs ou non jointifs et leur extension, d'une part, latéralement, d'autre part horizontalement, au niveau des bases de prise d'appui, reliées directement ou indirectement à l'embase ou socle de la partie mâle par des nervures verticales, en forme de T ou de U inversé, ainsi que par ailleurs le système de guidage à base de profils successifs de cames, limite le risque d'ovalisation, accroît la possibilité d'un resserrement des cotes de fabrication tout en permettant la réduction de la durée du cycle de production et de consommation matière. Cette caractéristique rend caduque l'utilisation de surépaisseurs de stabilisation.

Selon une autre caractéristique d'un support télescopique de support extensible auto-réglable perfectionné, réalisé en matière synthétique, la largeur des secteurs horizontaux nervurés de prise d'appui, en particulier de celui correspondant au premier niveau d'extension du dispositif, peut être limitée à la largeur de l'extrémité inférieure de la butée unique, le niveau de l'extrémité supérieure du profil parcouru par le doit-guide au début et en fin du cycle d'extension/compression pouvant alors être inférieur au niveau de la première base de prise d'appui de la butée et les pentes des profils, en particulier celles du profil de came descendant qui ramène le doigt-guide dans le profil vertical d'extension/compression, pouvant ainsi être accentuées et faciliter le coulissement du doigt-guide.

Selon une autre caractéristique d'un support télescopique de support extensible auto-réglable perfectionné, réalisé en matière synthétique, des profils de nervures disposés, verticalement, à la périphérie de la partie mâle, entre l'embase ou socle et le plan supérieur de la partie mâle, sont au moins au nombre de trois et disposés radialement formant entre eux un angle approximativement égal à 120°, ce qui permet d'assurer, à tous les niveaux, la stabilité angulaire de la partie mâle et de faciliter son coulissement à l'intérieur de la partie femelle.

Selon une autre caractéristique d'un support télescopique de support extensible auto-réglable perfectionné, réalisé en matière synthétique, les surfaces des profils de nervure verticaux, jointives au niveau des joints de moulage, sont biseautées de manière à former une gorge en V et à éviter ainsi que toute surépaisseur induite par ces joints de moulage n'entrave le coulissement de la partie mâle à l'intérieur de la partie femelle.

Selon une dernière caractéristique d'un support télescopique de support extensible autoréglable perfectionné, celui-ci comporte des moyens destinés à compenser l'adhérence du doigt-guide en coulissement à l'intérieur des profils de cames ou l'insuffisance de leurs pentes, constitués par un aménagement prévoyant une partie femelle, de poids globalement supérieur à celui de la partie mâle, coulissant, par gravité, en périphérie de la partie mâle ou l'aménagement d'un insert, d'un poids spécifique élevé, formant lest, dans la partie mâle prévue creuse et coulissant par gravité à l'intérieur de la partie femelle

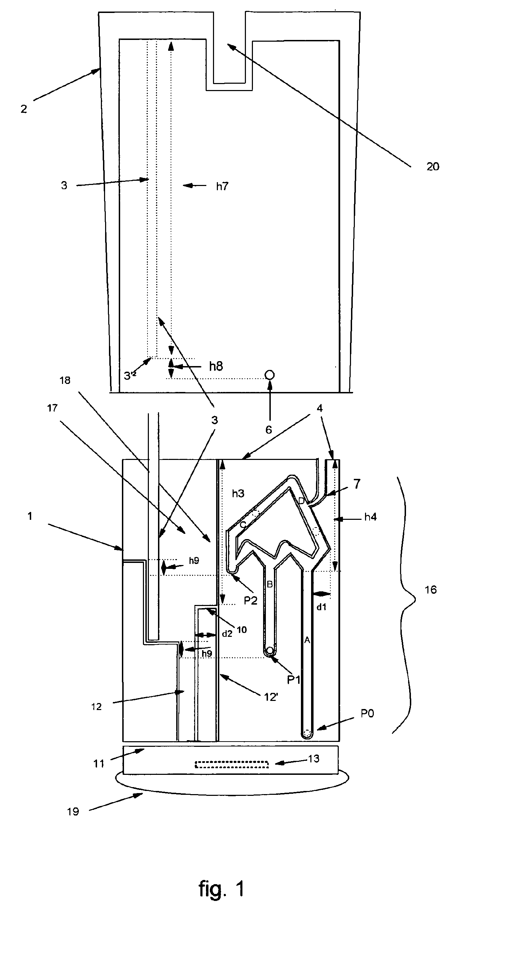

À titre d'illustration, la figure 1 représente, de façon non limitative, les développements plans, d'une partie mâle (1) d'un support télescopique autoréglable comportant, d'une part, un décrochement (17) constitué des espaces verticaux jointifs dont les bases respectives (8a, 8b, 8c) sont disposées en marches d'escalier, et une extension (18) s'étendant latéralement, qui permettent à une butée (3), solidaire de la partie femelle (2), d'atteindre deux paliers haut de prise d'appui (8b, 8c), dont les niveaux sont fonction de la longueur de la butée et des extensions recherchées, et d'autre part, un système de guidage à base de profils successifs de cames (16), constitué successivement d'un profil (A) vertical ascendant, d'un profil horizontal (B) en zigzag, orienté vers la gauche, dans lequel sont ménagés des logements successifs (P1, P2) de positionnement du doigt-guide (6), d'un profil (C) ascendant verticalement, puis selon une pente orientée vers la droite, et après l'apogée de la came, du profil (D) descendant vers la droite puis vers la gauche et aboutissant à la base du profil (B) ou il fait sa jonction avec le profil (A), ce système de guidage étant parcouru par un doit-guide (6) également solidaire de la partie femelle (2), qui pénètre dans le système de guidage par le biais d'un profil de jonction (7).

La figure 1 illustre également, de manière non limitative, le recours, sur une partie mâle de type creuse et d'épaisseur constante, à des nervures délimitant latéralement le décrochement jointif (17) et son extension (18) s'étendant latéralement, et définissant verticalement, les bases de prise d'appui (8b, 8c), reliées directement ou indirectement à l'embase ou socle (11) de la partie mâle (1) par des nervures verticales (12, 12'), ainsi que par ailleurs le système de guidage à base de profils successifs de cames (16).

La figure 1 représente aussi, au niveau de l'embase ou socle (11), un lest (13) et une extrémité essentiellement semi-sphérique (19), ainsi que le logement (20) prévu pour la fixation du support télescopique sur l'équipement à supporter..

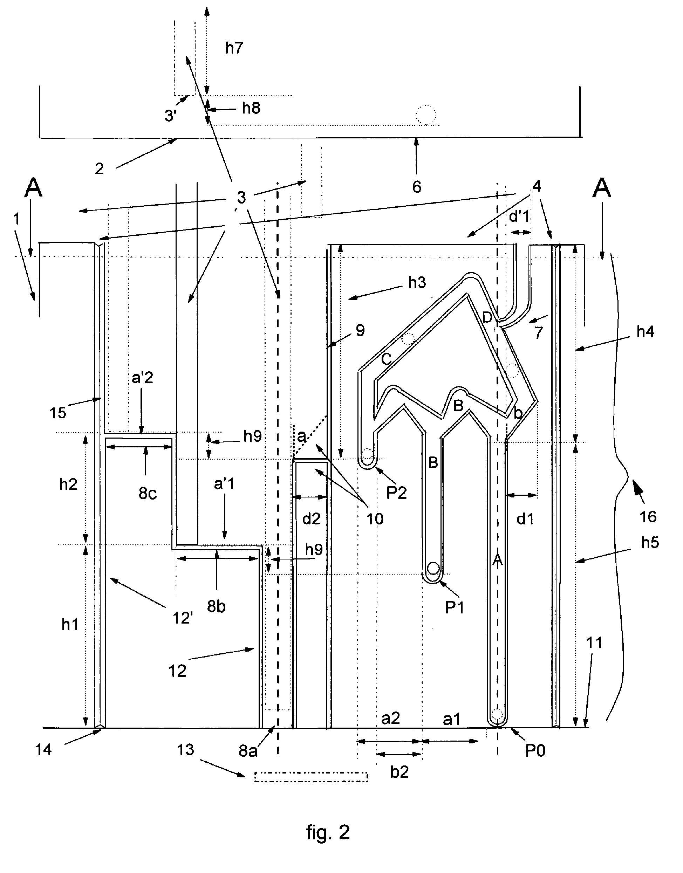

La figure 2, représente, de manière non limitative, pour une butée (3) d'une longueur supérieure à la distance (h₄) séparant le haut du profil de came (A) du plan horizontal supérieur (4) de la partie mâle (1), d'une part, les hauteurs h₁, h₂ des bases (8b, 8c) de prise d'appui de la butée coopérante (3), la hauteur h₁ de la première base de prise d'appui (8_{b}) étant inférieure à la hauteur h₅ du profil (A), la distance h₈, séparant l'extrémité inférieure de la butée (3) d'une ligne parallèle au plan horizontal inférieur de la partie femelle (2) et tangente au point de la périphérie du diamètre maximum du doigt-guide (6) le plus proche de ce même plan horizontal, étant légèrement inférieure à la distance (h₉) séparant l'une quelconque des bases de prise d'appui (8_{b}, 8_{c}) de la ligne tangente au bas des emplacements occupés par le doigt-guide (6) dans les logements successifs (P₁, P₂) du doigt-guide (6) sur le profil de came (B) au moment des prises d'appui successives, l'angle α de la base inclinée (9) voire rectangulaire (10) de l'extension (18) du décrochement (17) délimité par les parois (9, 10) dont la hauteur h₃ totale est au moins égale à la distance verticale (h₄) séparant le haut du profil de came (A) de la surface horizontale supérieure (4) de la partie mâle (1), et les arcs (a₁), (a₂), (a'₁), (a₃), déterminés par les logements successifs (P₁, P₂) étant dimensionnés de telle manière que a'₁≥ a₁ et a'₁≤a₁+b₂.

La figure (2) représente par ailleurs l'angle α formé par la base oblique de l'extension (18) du décrochement (17) avec la génératrice de la partie mâle (1), au moins égal l'angle β formé par l'arête inférieure du profil (D) du système de guidage à base de profils successifs de cames, cette paroi latérale (9, 10) déterminant par ailleurs un arc (d₂) au moins égal à l'arc d_{1,} de manière à ce que la butée (3), d'une longueur supérieure à la distance (h₄), puisse s'emboîter sans entrave dans son décrochement coopérant sur la partie mâle (1) alors même que le doigt-guide (6) se trouve à un niveau supérieur à celui de l'extrémité supérieure du profil de came (A).

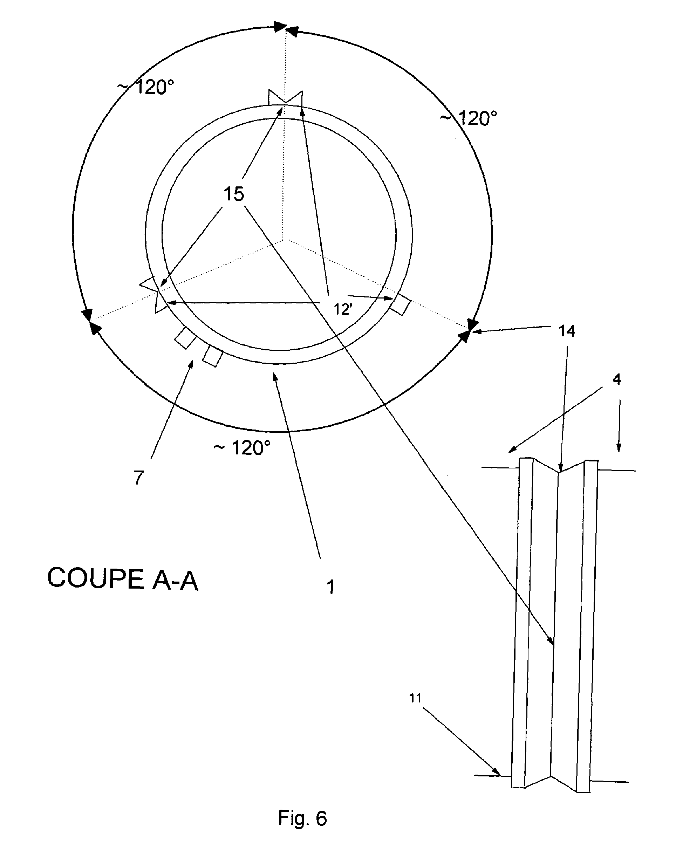

La figure 2 représente par ailleurs la coupe A-A correspondant à la section horizontale de la partie mâle (1) représentée en figure 6.

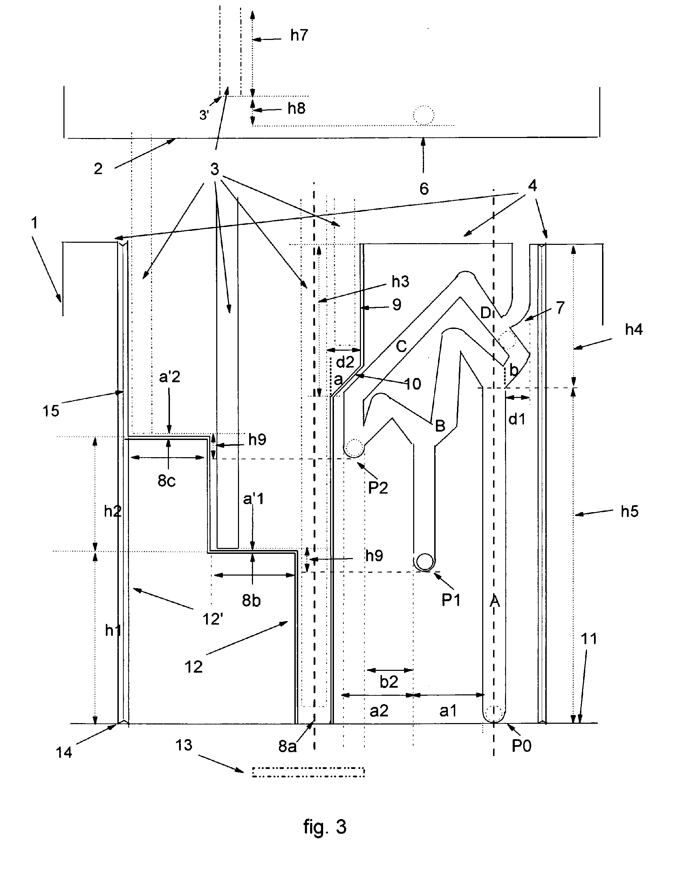

La figure 3 illustre, de manière non limitative, l'encastrement sur la partie mâle (1), d'une part, du système de guidage à base de profils successifs de cames (16), d'autre part, du décrochement (17) et de son extension latérale (18), obtenu grâce, d'une part, au tracé oblique descendant du profil de came en zigzag (B) et, d'autre part, au positionnement de l'extension (18), s'étendant latéralement, du décrochement (17), entre la partie oblique du profil de came (C) conduisant à l'apogée du système de guidage à base de profils successifs de cames (A, B, C, et D) et le plan horizontal supérieur (4) de la partie mâle (1).

La figure 4 représente, sur la partie mâle (1), un système de guidage (16), à base de profils successifs de cames, comportant un profil (A) court et un décrochement dont la base de prise d'appui (8ₐ) est élargie pour permettre le déplacement latéral de la butée (3), solidaire de la partie femelle (2), avant que son extrémité inférieure (3') ait atteint un niveau supérieur à celui de l'extrémité supérieure du profil de came (A).

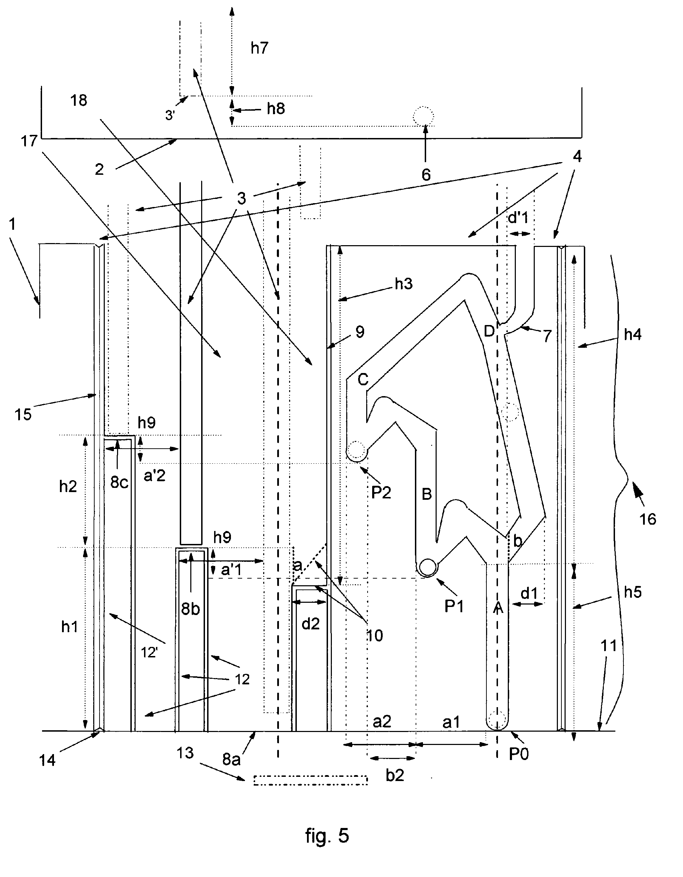

La figure 5 représente, sur la partie mâle (1), un décrochement (17) comportant des bases de prise d'appui (8b, 8c) de la butée (3), solidaire de la partie femelle (2), étayées individuellement par deux nervures verticales (12) dont les extrémités inférieures sont reliées à l'embase ou socle (11).

Les figures 2, 3, 4 et 5 représentent les nervures verticales (12') rejoignant, à leur extrémité inférieure, l'embase ou socle (11), et à leur extrémité supérieure, la surface horizontale supérieure (4) de la partie mâle (1), espacées d'approximativement 120° et dont les surfaces, jointives au niveau des joints de moulage (14), et parallèles au cylindre intérieur décrit par la partie femelle (2), sont biseautées de manière à former une gorge en V (15)

La figure 6 représente la section horizontale de la partie mâle (1) du dispositif télescopique autoréglable objet de l'invention, selon une coupe A-A, et fait apparaître le profil et le positionnement, des nervures verticales (12') espacées d'environ 120° à la périphérie du cylindre décrit par la partie mâle (1) et dont les surfaces extérieures (12'), parallèles au cylindre intérieur décrit par la partie femelle (2), sont jointives au niveau des deux joints de moulage (14) et sont biseautées de manière à former une gorge en V (15).

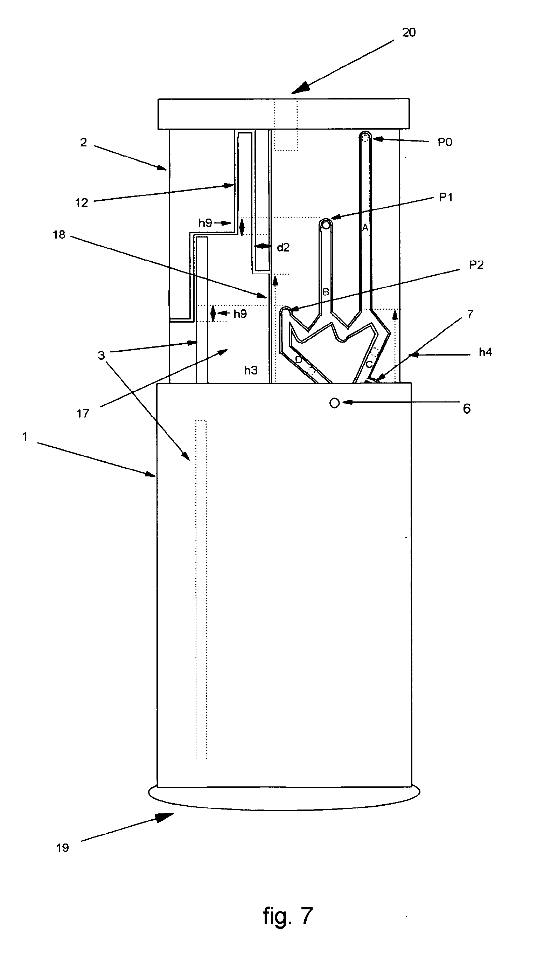

La figure 7 représente les parties mâle (1) et femelle (2) dont les positions respectives sont inversées, la partie femelle (2) étant en dessous de la partie mâle (1) et son extrémité inférieure ayant une forme essentiellement semi-sphérique (19), tandis que la partie mâle (1) est pourvue du logement (20) prévu pour la fixation du support télescopique sur l'équipement à supporter.

Le dispositif selon l'invention permet d'obtenir, pour une hauteur initiale donnée du dispositif, un gain en amplitude plus important, un plus grand nombre de positions d'extension, une plus grande stabilité du dispositif en extension, ces fonctionnalités additives et cette amélioration qualitative résultant d'une part, du meilleur recouvrement des deux éléments télescopiques (1) et (2) du dispositif en position d'extension, de l'allongement de la butée (3), rendu possible par l'extension (18), s'étendant latéralement, du décrochement (17), de l'abaissement concomitant du niveau (h₂) de la base de prise d'appui supérieure (8c) de la butée (3), et d'autre part, de la possibilité d'un resserrement des cotes du cylindre extérieur décrit par la partie mâle (1) par rapport au cylindre intérieur décrit par la partie femelle (2), résultant du recours à une partie mâle (1) d'épaisseur constante, de nouvelles modalités d'aménagement de sa surface au moyen de nervures de délimitation latérale des décrochements de butée (17, 18), de délimitation du système de guidage à profils successifs de came (16), ainsi que de définition des nervures horizontales constituant les bases (8b, 8c) de prise d'appui, étayées par ailleurs par des nervures verticales (12, 12') dans le cadre d'un aménagement en forme de marches d'escalier ou de prises d'appui autonomes en forme de T ou de U inversés.

## Revendications

1. Dispositif télescopique de support extensible, à deux ou plusieurs paliers, dont l'allongement est obtenu, aux différents niveaux hauts, par la prise d'appui d'une butée (3) ou de plusieurs butées de même longueur permettant une répartition de charge, en saillie sur une partie femelle (2), sur l'une des bases d'appui ou marches (8ₐ, 8_{b},) d'un ou de décrochements (17) disposés sur la périphérie d'une partie mâle (1), ou en complément, par la prise d'appui de la butée (3) sur la surface par exemple horizontale supérieure (4) de la partie mâle (1), le choix d'une base ou d'une marche (8ₐ, 8_{b},) étant déterminé par la position d'un doigt-guide (6), solidaire de la partie femelle (2) et se déplaçant à l'intérieur d'un système de guidage (16), à base de profils successifs de cames, également aménagé à la périphérie de la partie mâle (1), le dit système de guidage à cames (16) étant constitué successivement d'un profil de came (A) vertical ascendant, d'un profil de came (B) en zigzag dans lequel sont ménagés des logements successifs (P1, P2) du doigt-guide (6) correspondant sur l'une des bases d'appui successives de la butée (3), cette prise d'appui étant exclusivement assurée par la dite butée (3), d'un profil de came (C) ascendant verticalement, puis en pente jusqu'à l'apogée de la came, d'un profil de came (D) descendant dans un sens d'abord opposé à celui du profil de came (C) puis rejoignant la base du profil de came (B) où il fait sa jonction avec le profil de came (A), de sorte à ce que le dispositif soit systématiquement en appui **caractérisé en ce que** la ou les butée(s) (3) est/sont d'une longueur (h₇), supérieure à la distance (h₄) séparant le haut du profil de came (A) du plan horizontal (4) de la partie mâle (1) à l'opposé des bases d'appui ou des marches (8ₐ, 8_{b},) et **en ce que** le ou les décrochement(s) (17) comporte(nt), du côté de la base de prise d'appui la plus basse, une extension (18) s'étendant latéralement, définie selon un arc (d₂) au moins égal à l'arc (d₁), défini entre le bord du profil de came (A) situé du côté latéral opposé au profil B et le bord le plus éloigné du profil de came D, dans cette même direction opposée au profil (B), et s'étendant vers le bas, depuis le sommet de la partie supérieure de la partie mâle (1), jusqu'à la base (10) de ladite extension (18), sur une distance (h₃) supérieure à la distance (h4) séparant le haut de l'extrémité supérieure du profil vertical de came (A) de ce même plan horizontal (4) de la partie mâle (1) à l'opposé des bases d'appui ou des marches (8ₐ, 8_{b},), de sorte à éviter que, lorsque le dispositif télescopique est en phase de compression, le plan inférieur de l'extrémité (3') de la ou des butée(s) (3) ne vienne en appui sur le plan horizontal (4) de la partie mâle (1) à l'opposé des bases d'appui ou des marches (8ₐ, 8_{b},) ou sur la paroi inférieure (10) de l'extension (18) du décrochement (17).

2. Dispositif de support télescopique selon la revendication 1 **caractérisé en ce que** la base (10) de l'extension (18), s'étendant latéralement, du décrochement (17) comporte au moins partiellement, à partir de son extrémité latérale opposée au décrochement (17), une oblicité par rapport à la génératrice de la partie mâle (1), selon un angle α au moins égal à l'angle β formé par l'arête inférieure du profil de came (D), avec cette même génératrice.

3. Dispositif télescopique de support extensible selon la revendication 1, **caractérisé en ce que** le tracé du profil de came de type en zigzag (B) est descendant au fur et à mesure qu'il s'écarte du profil de came vertical (A) parcouru par le doigt-guide (6) au début et à la fin du cycle d'extension/compression du dispositif, de sorte à réduire l'amplitude angulaire du déplacement pivotant de l'élément mâle (1) par rapport à l'élément femelle et à permettre ainsi la création d'un plus grand nombre de paliers de prise d'appui.

4. Dispositif télescopique de support extensible selon la revendication 1 ou 3, **caractérisé en ce que** la partie inférieure (10) de l'extension (18), s'étendant latéralement, du décrochement (17) aménagé sur le cylindre décrit par la paroi extérieure de la partie mâle (1) est positionnée au dessus de la zone ascendante du profil de came (C) de manière à « s'encastrer » dans l'espace vacant entre, d'une part, la partie oblique du profil de came (C) conduisant à l'apogée du système de guidage à base de profils successifs de cames et d'autre part, le plan supérieur (4) de la partie mâle (1).

5. Dispositif télescopique de support extensible selon la revendication 1, dans laquelle la partie mâle est de type creuse, **caractérisé en ce que** la dite partie mâle (1) présente une épaisseur constante et **en ce que** les différents profils de came successifs (A, B, C et D) parcourus par le doigt-guide (6) ainsi que la délimitation latérale et les bases de prise d'appui (8ₐ, 8_{b},) du décrochement (17) définis sur cette partie mâle (1) sont constituées de nervures (12, 12').

6. Dispositif télescopique de support extensible selon les revendications 4 et 5 **caractérisé en que** les nervures qui se font face, respectivement, sur l'extension (18), s'étendant latéralement, du décrochement (17) et sur le profil (C) du système de guidage à base de profils successifs de cames sont fusionnées de sorte à accentuer le degré d'encastrement de l'extension (18) du décrochement (17).

7. Dispositif télescopique de support extensible selon les revendications 1 et 5, **caractérisé en ce que** le segment inférieur (8a) correspondant à la position du doigt-guide (6) dans le bas du profil (A) s'étend selon un arc (a₁) correspondant au parcours du doigt-guide (6) se déplaçant de l'extrémité supérieure du profil de came (A) vers le logement de positionnement (P₁) dans le profil de came (B) et **en ce que** les segments horizontaux nervurés de prise d'appui suivants (8_{b}, 8_{c},) présentent une largeur limitée à celle de l'extrémité inférieure de la butée (3) et **en ce que** au moins la première prise d'appui en élévation est supportée par au moins une nervure verticale (12), de sorte que le niveau de l'extrémité supérieure du profil (A) parcouru par le doigt-guide (6) au début et en fin du cycle d'extension/compression puisse être inférieur au niveau (h₁) atteint par la première base de prise d'appui de la butée (8_{b}) du décrochement (17) et que, corrélativement, la pente des deux tronçons du profil de came (D) puisse être accentuée pour y faciliter le coulissement du doigt-guide (6).

8. Dispositif télescopique de support extensible selon les revendications 1 et 5, dans lequel la partie mâle présente, en développé, sur sa surface, successivement, un système de guidage à cames et deux systèmes (17) de décrochement, **caractérisé en ce que** les segments de nervures (12'), disposés verticalement entre l'embase (11) et le plan supérieur (4) de la partie mâle (1), à la périphérie de la dite partie mâle (1) sont au moins au nombre de trois et séparés d'un angle approximativement égal de 120° pour assurer la stabilité angulaire de la partie mâle (1) en coulissement à l'intérieur de la partie femelle (2), quel que soit le niveau d'extension du dispositif.

9. Dispositif télescopique de support extensible selon les revendications 1, 5 et 8, **caractérisé en ce que** les surfaces extérieures des segments de nervure (12') disposés verticalement entre l'embase ou socle (11) et le plan supérieur (4) de la partie mâle (1), jointives au niveau des joints de moulage (14), sont biseautées et forment, à partir des bords, en coupe horizontale, une gorge en V (15), définissant une zone intermédiaire en retrait par rapport aux dits bords.

10. Dispositif télescopique selon la revendication 1 dans lequel le système de guide à profils de cames successifs (A, B, C, D) est relié à la surface horizontale supérieure (4) de la partie mâle (1) par un profil de jonction (7) permettant l'introduction du doigt-guide (6) lors du montage débouchant sur ladite surface horizontale supérieure (4) et dans le profil (D), **caractérisé en ce que** l'arc (d'₁) délimité entre le bord latéral du profil d'introduction (A) et le bord latéral dudit profil de jonction (7) situé du côté opposé au profil en zigzag (B) est inférieur à l'arc (d₁) délimité entre le bord latéral du profil d'introduction (A) et le point du profil (D), emprunté par le doigt-guide (6) dans sa phase descendante, latéralement le plus distant du bord latéral du profil d'introduction (A).

11. Dispositif télescopique selon les revendications 1 et 5, **caractérisé en ce qu'**il comporte des moyens destinés à compenser l'adhérence du doigt-guide (6) en coulissement à l'intérieur des profils de cames (A, B, C et D) ou l'insuffisance de leurs pentes, constitués par un aménagement prévoyant une partie femelle (2), de poids globalement supérieur à celui de la partie mâle (1), coulissant, par gravité, en périphérie de la partie mâle (1) ou l'aménagement d'un insert (13), d'un poids spécifique élevé, formant lest, dans la partie mâle prévue creuse et coulissant par gravité à l'intérieur de la partie femelle.
